(19) Europäisches Patentamt
European Patent Office
Office européen des brevets

(11) Numéro de publication : **0 477 066 A1**

(12) **DEMANDE DE BREVET EUROPEEN**

(21) Numéro de dépôt : **91402420.3**

(22) Date de dépôt : **11.09.91**

(51) Int. Cl.⁵ : **B23P 6/00**

(30) Priorité : **19.09.90 FR 9011574**

(43) Date de publication de la demande :
**25.03.92 Bulletin 92/13**

(84) Etats contractants désignés :
**DE GB IT**

(71) Demandeur : **FRAMATOME**
**Tour Fiat 1, Place de la Coupole**
**F-92400 Courbevoie (FR)**

(72) Inventeur : **Archer, Jacques**
**5 rue du Mérou**
**F-92290 Chatenay-Malabry (FR)**
Inventeur : **Moreau, Georges**
**8 allée des Bruyères, La Perrinche**
**F-01440 Viriat (FR)**
Inventeur : **Besson, Daniel**
**8 Chemin du Montpellas**
**F-69009 Lyon (FR)**
Inventeur : **Giraud, Benoit**
**27 avenue Lacassagne Allée 12**
**F-69003 Lyon (FR)**

(74) Mandataire : **Bouget, Lucien et al**
**Cabinet Lavoix 2, Place d'Estienne d'Orves**
**F-75441 Paris Cédex 09 (FR)**

(54) **Procédé de remplacement d'un tube d'un échangeur de chaleur à tubes droits et utilisation de ce procédé.**

(57) On réalise une coupe transversale (18, 19) du tube (4) à remplacer, au voisinage de ses piquages de raccordement (14, 15), à chacune de ses extrémités. On réalise une coupe (19') de la zone de raccordement tronconique (16') du tube (4) avec le second piquage (15). Les opérations de découpage sont réalisées par l'intérieur du tube (4) et à travers l'une ou l'autre des plaques tubulaires (2, 3). On extrait le tube (4) à remplacer de l'échangeur de chaleur, par l'intérieur du second piquage (15) et l'ouverture (13) correspondante de la seconde plaque tubulaire (3). On introduit un tube de remplacement dans l'échangeur de chaleur par l'ouverture (13) de la seconde plaque tubulaire (3) jusqu'à ce qu'une première extrémité du tube engagée dans l'échangeur de chaleur vienne au niveau de la zone de coupe (18) du premier piquage (14). On réalise le soudage de la première extrémité du tube sur le premier piquage (14). On ajuste la longueur du tube de remplacement de manière que sa seconde extrémité puisse s'engager dans le second piquage (15) sur une longueur déterminée et on réalise le soudage en corniche de la seconde extrémité du tube de remplacement à l'intérieur du second piquage (15).

EP 0 477 066 A1

FIG.3

L'invention concerne un procédé de remplacement d'un tube d'un échangeur de chaleur à tubes droits comportant deux plaques tubulaires sensiblement parallèles et éloignées l'une de l'autre traversées par des ouvertures au niveau desquelles les tubes sont fixés à leurs extrémités.

L'invention s'applique en particulier dans le cas d'un générateur de vapeur à tubes droits d'un réacteur nucléaire à neutrons rapides refroidi par un métal liquide tel que le sodium.

On connaît des générateurs de vapeur de réacteur nucléaire à neutrons rapides refroidi par un métal liquide, qui comportent un faisceau constitué par un ensemble de tubes droits parallèles fixés à leurs extrémités dans des plaques tubulaires parallèles entre elles et solidaires de l'enveloppe externe du générateur de vapeur. Les plaques tubulaires délimitent à l'intérieur de l'enveloppe du générateur de vapeur trois zones successives qui constituent pour la première une boîte à eau, pour la seconde une zone de circulation du métal liquide caloporteur en contact avec la surface externe des tubes du faisceau et, pour la troisième, un collecteur de vapeur.

Les plaques tubulaires sont percées sur toute leur épaisseur par des trous dans l'axe de chacun desquels est fixée l'extrémité d'un tube, par soudage sur un piquage de raccordement de forme tubulaire et disposé en saillie par rapport à la face intérieure de la plaque tubulaire, ce piquage de raccordement étant généralement désigné par le terme "tétine" dans la technique considérée.

Chacun des tubes du faisceau de l'échangeur de chaleur est fixé à l'une de ses extrémités sur un premier piquage d'une première plaque tubulaire et, à son autre extrémité, sur un second piquage d'une seconde plaque tubulaire, le diamètre intérieur du second piquage et de l'ouverture correspondante de la seconde plaque tubulaire étant légèrement supérieur au diamètre extérieur du tube qui est raccordé au second piquage par une zone de jonction de forme tronconique.

Chacun des tubes assure donc la jonction entre la boîte à eau et le collecteur de vapeur, l'eau d'alimentation du générateur de vapeur répartie dans l'ensemble des tubes du faisceau à la sortie de la boîte à eau étant ensuite échauffée et vaporisée à l'intérieur des tubes, par contact thermique avec le métal liquide caloporteur. La vapeur formée dans les tubes est ensuite récupérée dans le collecteur de vapeur.

Le sodium liquide chaud est généralement amené à la partie supérieure du générateur de vapeur, au voisinage de la plaque tubulaire délimitant le collecteur de vapeur ; le sodium liquide circule ensuite verticalement à l'extérieur des tubes du faisceau.

Dans le cas où l'un des tubes présente un défaut (par exemple une fissure) générateur d'une fuite, cette fuite doit être détectée très rapidement, de manière qu'on puisse arrêter le fonctionnement du générateur de vapeur et assurer sa vidange, avant que la réaction entre le sodium liquide et l'eau s'écoulant par la fuite atteigne une ampleur telle que le générateur de vapeur peut se trouver détérioré et que cette réaction ne puisse plus être maîtrisée par les dispositifs de sécurité prévus sur le générateur de vapeur et assurant l'amortissement des ondes de pression dans le sodium.

Une fuite au niveau de l'un des tubes du générateur de vapeur peut être mise en évidence, soit par la détection de l'hydrogène qui se forme par réaction de l'eau sur le sodium, soit par la détection acoustique du bruit de la réaction.

Après vidange complète du générateur de vapeur, il est nécessaire d'effectuer une réparation sur le tube défectueux présentant une fuite, soit par bouchage, soit par remplacement de ce tube défectueux, afin de permettre la remise en fonctionnement du générateur de vapeur.

Pour effectuer le bouchage d'un tube défectueux d'un générateur de vapeur, on a proposé différentes techniques, telles que décrites par exemple dans les brevets FR-A-2.524.609 et FR-A-2.560.962.

Dans le brevet FR-A-2.524.609, on propose de réaliser le bouchage du tube par un déplacement automatique d'un clapet placé à l'intérieur du tube, de manière à réaliser l'obturation de ce tube, sous l'effet de la différence de pression accompagnant l'apparition de la fuite et la réaction consécutive entre le sodium et l'eau. Ce bouchage du tube permet d'éviter que la fuite n'ait des conséquences néfastes, en séparant, de façon sûre et immédiate, l'eau ou la vapeur sous pression du sodium.

Dans le brevet FR-A-2.560. 962, on préconise un bouchage par mise en place d'un manchon flexible, dans une disposition axiale à l'intérieur du tube, ce manchon étant fixé par clavetage mécanique ou par soudage par explosion.

En réalité, les techniques de bouchage mettant en oeuvre des manchons expansifs, des clapets, ou la fixation d'un organe d'obturation par dudgeonnage, soudure par explosion ou clavetage, ne sont plus retenues dans le cadre des opérations d'entretien ou de réparation des générateurs de vapeur utilisant du sodium liquide comme fluide primaire. Il est en effet nécessaire de garantir, en fonctionnement, une étanchéité absolue entre l'eau et le sodium liquide. Aucune des techniques mentionnées ci-dessus ne permet de garantir une telle étanchéité absolue et son maintien dans le temps.

En outre, la proportion de tubes obturés au cours d'opérations successives de réparation d'un générateur de vapeur ne doit pas dépasser un certain pourcentage de l'ensemble des tubes.

On considère généralement que ce pourcentage doit se situer entre 10 et 15 % des tubes.

La technique de bouchage des tubes présente l'inconvénient d'entraîner une perte de puissance du générateur de vapeur et d'introduire une dissymétrie de température dans le faisceau de tubes, si bien que les autres tubes du faisceau subissent des sollicitations thermomécaniques accrues.

En outre, pour des raisons de sûreté, il n'est pas possible de placer des bouchons sur les parois extérieures des plaques tubulaires d'un générateur de vapeur, c'est-à-dire du côté de la boîte à eau ou du côté du collecteur de vapeur. En effet, dans ce cas, la détection d'hydrogène ou la détection acoustique permettant de déceler l'apparition d'une fuite d'eau ou de vapeur dans le sodium ne peut être réalisée de manière sûre et rapide. Une détection tardive d'une fuite d'eau dans le sodium présente des inconvénients très graves qui ont été mentionnés plus haut.

Les bouchons d'obturation des tubes doivent donc être placés sur les parois intérieures des plaques tubulaires, c'est-à-dire les parois dirigées vers la zone du générateur de vapeur renfermant le sodium et le faisceau de tubes. Les plaques tubulaires présentent des épaisseurs qui peuvent être relativement importantes, par exemple de l'ordre de 400 mm, si bien que les bouchons doivent être placés sur des parois situées à des distances importantes des faces extérieures d'accès des plaques tubulaires. Il en résulte une difficulté de mise en place des bouchons.

En outre, la soudure d'un bouchon d'obturation d'un tube de générateur de vapeur dont le fluide primaire est constitué par du sodium est d'une réalisation aussi délicate que celle du tube d'origine que l'on doit boucher et doit être contrôlée soigneusement.

Le but de l'invention est donc de proposer un procédé de remplacement d'un tube d'un échangeur de chaleur à tubes droits comportant deux plaques tubulaires sensiblement parallèles et éloignées l'une de l'autre traversées par des ouvertures au niveau desquelles les tubes sont fixés à leurs extrémités, par soudage sur des piquages de raccordement, chacun des tubes du faisceau de l'échangeur de chaleur étant fixé à l'une de ses extrémités sur un premier piquage d'une première plaque tubulaire et à son autre extrémité sur un second piquage d'une seconde plaque tubulaire, le diamètre intérieur de l'un au moins des piquages ou second piquage et de l'ouverture correspondante de la seconde plaque tubulaire étant sensiblement supérieur au diamètre extérieur du tube qui est raccordé au second piquage par une zone de jonction de forme tronconique, ce procédé permettant en particulier d'éviter les inconvénients liés à la réparation des tubes d'un générateur de vapeur par bouchage et de garantir une excellente tenue du tube dans le générateur de vapeur, après son redémarrage.

Dans ce but :

– on réalise une coupe transversale du tube au voisinage des piquages de raccordement, à chacune de ses extrémités, par l'intérieur et à travers l'une ou l'autre des plaques tubulaires,

– on réalise une coupe de la zone de raccordement tronconique du tube avec le second piquage,

– on extrait le tube à remplacer de l'espace de l'échangeur de chaleur compris entre les plaques tubulaires, par l'intérieur du second piquage et de l'ouverture correspondante de la seconde plaque tubulaire,

– on réalise le nettoyage et le réusinage des zones de coupe,

– on introduit un tube de remplacement dans l'échangeur de chaleur par l'ouverture de la seconde plaque tubulaire, jusqu'à ce qu'une première extrémité du tube engagée en premier dans l'échangeur de chaleur vienne au niveau de la zone de coupe du premier piquage,

– on réalise le soudage en corniche de la première extrémité du tube sur le premier piquage,

– on ajuste la longueur du tube de remplacement de manière que sa seconde extrémité soit engagée sur une longueur déterminée dans le second piquage,

– et on réalise le soudage en corniche de la seconde extrémité du tube à l'intérieur du second piquage.

Afin de bien faire comprendre l'invention, on va maintenant décrire, à titre d'exemple non limitatif, en se référant aux figures jointes en annexe, un mode de réalisation du procédé selon l'invention de remplacement d'un tube de générateur de vapeur d'un réacteur nucléaire à neutrons rapides refroidi par du sodium liquide et les dispositifs correspondants permettant la mise en oeuvre de ce procédé.

La figure 1 est une vue en élévation et en coupe partielle d'un générateur de vapeur à tubes droits d'un réacteur nucléaire à neutrons rapides.

La figure 2 est une vue en coupe à grande échelle des extrémités d'un tube du générateur de vapeur reliées à la première plaque tubulaire du côté du collecteur de vapeur et à la seconde plaque tubulaire du côté de la boîte à eau du générateur de vapeur, respectivement.

La figure 3 est une vue partielle en coupe axiale d'un tube du générateur de vapeur dont on effectue le remplacement, montrant la procédure générale de démontage du tube à remplacer.

La figure 4 est une vue en coupe de l'extrémité inférieure d'un tube tel que représenté sur les figures 2 et 3, pendant son découpage.

La figure 5 est une vue en coupe suivant 5-5 de la figure 4.

Les figures 6, 7, 8 et 9 sont des vues en coupe de la partie inférieure et du piquage de raccordement correspondant d'un tube de générateur de vapeur de remplacement, au cours de différentes phases permettant son raccordement à la seconde plaque tubulaire du générateur de vapeur.

La figure 10 est une vue en coupe transversale de différents tubes du faisceau d'un générateur de vapeur, pendant une opération de contrôle des soudures d'un tube de remplacement.

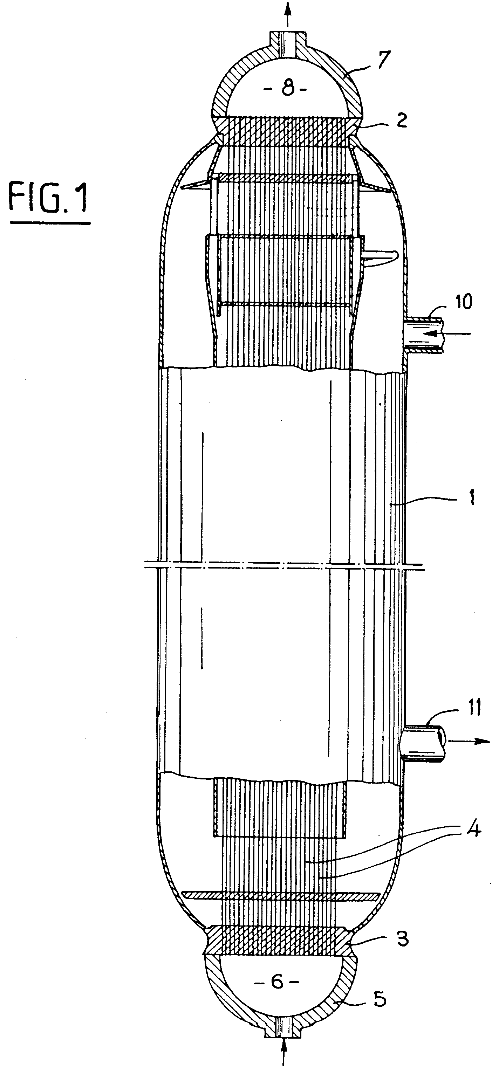

Sur la figure 1, on voit un générateur de vapeur à tubes droits comportant une enveloppe externe 1 et deux plaques tubulaires 2 et 3 fixées sur l'enveloppe à ses extrémités respectivement supérieure et inférieure. Les plaques tubulaires 2 et 3 sont percées de trous sur toute leur épaisseur et des tubes 4 droits et parallèles sont disposés entre les deux plaques 2 et 3 dans le prolongement des trous traversant ces plaques. La plaque inférieure 3 délimite avec une enveloppe hémisphérique 5 une boîte à eau 6 communiquant avec les extrémités d'entrée des tubes 4. La plaque 2 délimite avec une enveloppe hémisphérique 7 un collecteur de vapeur 8 en communication avec les extrémités de sortie des tubes 4. Entre la boîte à eau 6 et le collecteur de vapeur 8, l'enveloppe externe 1 du générateur de vapeur délimite une zone dans laquelle circule du métal liquide caloporteur tel que du sodium liquide pénétrant dans l'enveloppe 1 par une conduite 10 et sortant de cette enveloppe par une conduite 11.

De l'eau est introduite dans la boîte à eau 6 qui en assure la répartition dans les tubes 4 du faisceau. Cette eau circule dans les tubes de bas en haut, s'échauffe et se vaporise sous l'effet de la chaleur cédée par le métal liquide caloporteur. La vapeur formée est récupérée dans le collecteur 8.

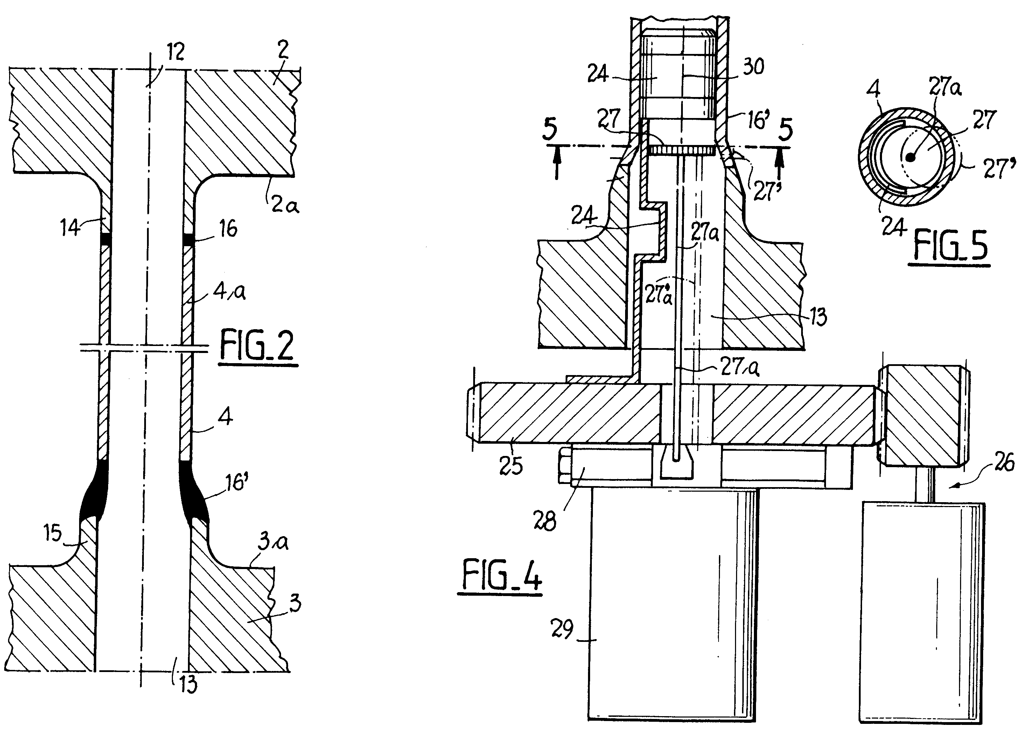

Sur la figure 2, on voit les extrémités d'un tube 4 du faisceau, au niveau des zones de jonction avec la plaque tubulaire supérieure 2 et avec la plaque tubulaire inférieure 3, respectivement. La jonction est assurée par l'intermédiaire de piquages 14 et 15 des plaques 2 et 3 respectivement, en saillie par rapport aux faces intérieures 2a et 3a de ces plaques tubulaires. Les piquages 14 et 15 des plaques tubulaires 2 et 3 de forme tubulaire, appelés "tétines", sont disposés de façon à entourer l'extrémité de sortie d'une ouverture 12 ou 13 de la plaque tubulaire correspondante 2 ou 3 sur les faces 2a et 3a.

Le diamètre du trou 13 traversant la plaque 3 et le diamètre intérieur de l'alésage de la tétine 15 sont légèrement supérieurs au diamètre extérieur du tube 4 dont la mise en place dans le faisceau peut être effectuée lors de la fabrication au travers de la plaque tubulaire 3, avant la mise en place de l'enveloppe 5 de la boîte à eau 6 ou par une ouverture, avec tape ou couvercle démontable, prévue dans l'enveloppe 5 telle qu'un trou d'homme ou trou de visite. Eventuellement l'enveloppe 5 de la boîte à eau pourrait être démontable dans son ensemble. L'extrémité supérieure 4a du tube 4 est fixée sur l'extrémité de la tétine 14, par soudage bout à bout, la jonction étant assurée par une soudure de forme annulaire 16.

La partie inférieure du tube 4 est raccordée à la tétine 15, par l'intermédiaire d'une zone de jonction par soudure 16' de forme sensiblement tronconique réalisée par fusion de l'extrémité du tube 4 engagée sur une longueur faible à l'intérieur de la tétine 15 et de l'extrémité de la tétine 15.

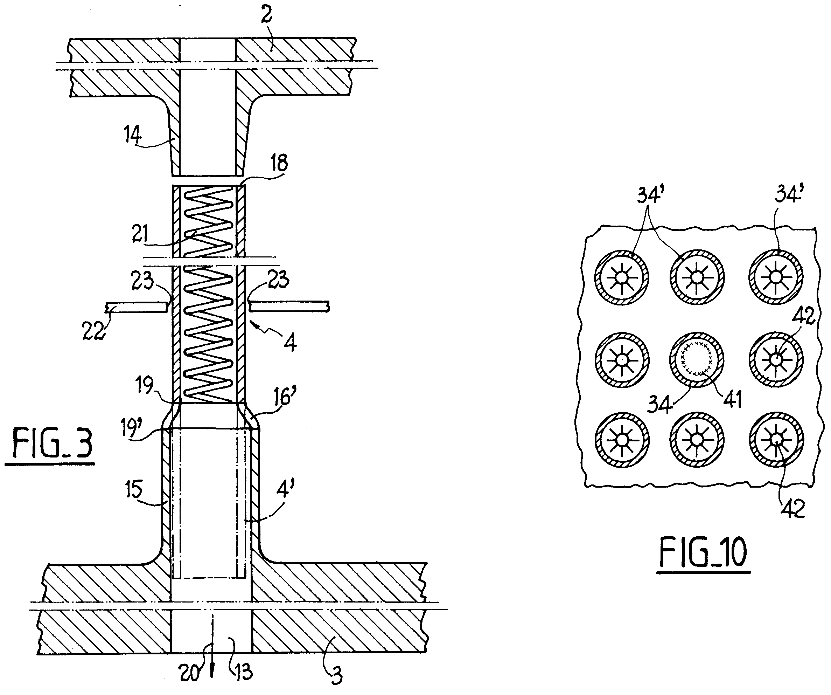

Sur la figure 3, on a représenté une partie d'un tube 4 présentant une fissure génératrice de fuite dont on effectue le remplacement par le procédé suivant l'invention.

Les éléments correspondants sur les figures 2 et 3 portent les mêmes repères.

Le remplacement du tube 4 qui nécessite dans un premier temps le démontage du tube défectueux présentant une fuite et, dans une seconde phase, l'introduction et la fixation d'un tube de remplacement dans le générateur de vapeur, est effectué sur le générateur de vapeur, après vidange du sodium liquide, refroidissement du générateur de vapeur et ouverture des parois externes démontables 5 et 7 de la boîte à eau 6 et du collecteur de vapeur 8 respectivement, ou ouverture des tapes ou couvercle prévus. De cette manière, la face extérieure des plaques tubulaires 2 et 3 est accessible, ce qui permet d'introduire dans le tube à démonter, par les ouvertures de traversée des plaques 2 et 3, les outillages nécessaires pour effectuer la coupe et l'extraction du tube 4 à remplacer.

De manière générale, le démontage du tube 4 est effectuée en réalisant une première coupe transversale 18 du tube au voisinage de sa zone de raccordement avec la tétine supérieure 14 puis deux coupes transversales 19 et 19' de part et d'autre de la zone de jonction 16' de forme globalement tronconique. La zone de raccordement tronconique 16' est découpée de manière à être extraite du générateur de vapeur, par l'ouverture 13 de la plaque tubulaire 3. Le tube 4 est ensuite extrait du générateur de vapeur par l'ouverture 13 dont le diamètre est supérieur au diamètre extérieur du tube 4, comme il est indiqué par la position intermédiaire en pointillés 4' d'une partie du tube 4 et par la flèche 20 indiquant la direction du déplacement du tube 4 permettant son extraction.

Un élément de chauffage 21 qui peut être constitué par exemple par une résistance électrique enroulée en hélice est disposé à l'intérieur du tube et alimenté en courant électrique de chauffage pendant l'extraction du tube 4. Le chauffage du tube 4, pendant son extraction permet de réaliser la fusion de dépôts éventuels de sodium subsistant sur la surface extérieure du tube, après la vidange du générateur de vapeur. La liquéfaction des dépôts de sodium tels que 23 sur le tube 4 permet en particulier de faciliter l'extraction du tube au niveau des grilles telles que la grille 22 assurant le maintien transversal des tubes 4 dans l'enveloppe du générateur de vapeur.

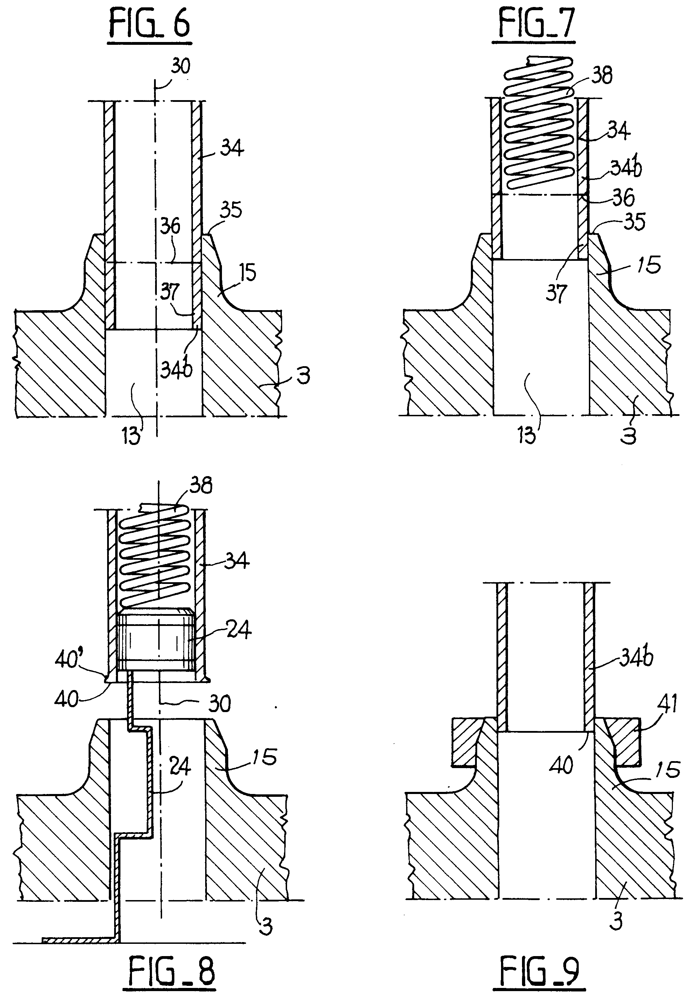

Les coupes transversales telles que 18, 19 et 19' des zones de jonction du tube 4 peuvent être réalisées en utilisant un dispositif tel que représenté sur les figures 4 et 5.

Ce dispositif de découpage d'un tube par l'intérieur est bien connu et comporte un ensemble de centrage et de guidage 24, un plateau tournant 25, un ensemble 26 d'entrainement du plateau tournant, une fraise 27 montée à l'extrémité d'un axe 27a et un chariot 28 assurant le support de l'axe 27a de la fraise 27 et de son motoréducteur d'entraînement 29. Le dispositif de centrage et de guidage 24 est introduit dans l'alésage 12 de la plaque tubulaire supérieure ou dans l'alésage 13 de la plaque tubulaire inférieure, comme représenté sur la figure 4, puis à l'intérieur du tube 4, pour réaliser la coupe 18 ou les coupes 19 et 19' respectivement.

Le dispositif 24 comporte deux parties reliées entre elles dont l'une assure le centrage dans le tube 4 et l'autre, dans la plaque tubulaire correspondante 2 ou 3. Le plateau tournant 25 permet de faire effectuer à l'ensemble de l'outil de découpage un tour complet autour de l'axe 30 du tube 4.

Le chariot 28 permet de déplacer l'axe 27a à l'extrémité duquel est fixée la fraise 27 et son motoréducteur d'entraînement en rotation 29, dans une direction radiale du plateau 25. Ce déplacement radial permet de réaliser le mouvement d'avance de la fraise entre ses positions 27 et 27' pour réaliser le découpage du tube (voir figures 4 et 5).

Après découpage du tube 4, suivant les coupes 18, 19 et 19', le tube 4 est extrait du générateur de vapeur de la manière qui a été indiquée plus haut.

On effectue ensuite, en utilisant un dispositif analogue au dispositif représenté sur la figure 4 équipé d'un outil de forme appropriée en remplacement de la fraise 27, le nettoyage puis la préparation des zones de coupe situées à l'extrémité des tétines 14 et 15 et destinées à constituer les zones de jonction des plaques tubulaires et d'un tube de remplacement du tube défectueux 4. On effectue généralement un ébavurage et un usinage, tel qu'un chanfreinage de l'extrémité des tétines 14 et 15.

Comme il est visible sur la figure 6, le tube de remplacement 34 qui est constitué par un tube dont le diamètre est sensiblement identique au diamètre du tube à remplacer et dont l'intégrité de la paroi a été soigneusement contrôlée est introduit dans le générateur de vapeur, par l'ouverture 13 de la plaque tubulaire inférieure 3 et déplacé dans la direction verticale correspondant à l'axe 30 du tube, à l'intérieur du générateur de vapeur, jusqu'au moment où l'extrémité supérieure du tube 34 (non représentée sur la figure 6) vient en butée sur la partie d'extrémité de la tétine 14 de la plaque tubulaire supérieure 2.

On réalise, par l'intérieur du tube, en utilisant un dispositif de soudage orbital de type connu, une soudure de jonction circulaire entre l'extrémité supérieure du tube 34 et la tétine 14, analogue à la soudure circulaire 16 représentée sur la figure 2.

Comme il est visible sur la figure 6, la longueur du tube 34 est telle que, lorsque la partie supérieure de ce tube a été fixée sur la tétine 14 par une soudure circulaire, la partie inférieure 34b du tube 34 est engagée sur une certaine longueur à l'intérieur de la tétine 15 et de l'ouverture 13 traversant la plaque tubulaire inférieure 3.

Les opérations nécessaires pour effectuer la fixation du tube de remplacement 34 dans le générateur de vapeur sont identiques aux opérations nécessaires pour effectuer le montage et la fixation d'un tube droit, lors de la fabrication en usine d'un générateur de vapeur, suivant le procédé décrit dans le brevet FR-A-2.613.961 déposé le 17 avril 1987 par la Société NOVATOME.

On effectue le repérage du plan de section droite du tube 34 situé exactement au niveau de l'extrémité 35 de la tétine 15, lorsque le tube 34 fixé à son extrémité supérieure à la tétine 14 est engagé par son extrémité inférieure 34b dans la tétine 15.

On repère de manière exacte le plan de section droite 36 situé à une distance axiale $\underline{d}$ parfaitement déterminée du plan de section droite défini précédemment et correspondant à l'extrémité 35 de la tétine 15. La distance $\underline{d}$ qui correspond à la longueur d'engagement souhaitable du tube 34 dans la tétine 15 pour assurer la jonction par soudure entre ces deux éléments est généralement égale à 2 mm.

Comme il est visible sur la figure 7, on introduit dans le tube 34 un serpentin de refroidissement 38 dans lequel on fait circuler un fluide à très basse température tel que de l'azote liquide. On obtient ainsi un refroidissement et une rétraction thermique du tube 34, de sorte que le plan de section droite 36 repéré précédemment se trouve à l'extérieur de l'alésage de la tétine 15.

On peut alors effectuer la coupe du tube 34, suivant le plan de section droite 36, en utilisant un dispositif analogue au dispositif représenté sur la figure 4, et sans risque de détérioration de la paroi intérieure de la tétine 15. Cette opération de coupe permet de séparer la surlongueur 37 du tube 34, cette surlongueur 37 étant ensuite extraite du générateur de vapeur par l'ouverture 13 de la plaque tubulaire 3.

Sur la figure 8, on a représenté le dispositif de coupe analogue au dispositif représenté sur la figure 4 en position dans le tube 34, à l'issue de l'opération de coupe, suivant le plan de section droite 36. L'extrémité 40 fraichement découpée du tube 34 peut comporter des bavures 40', si bien qu'un ébavurage de cette extrémité 40 du tube est réalisé à l'issue de la coupe.

Le serpentin de refroidissement 38 est extrait du tube 34, de telle sorte que le tube revienne à sa température initiale.

Comme il est visible sur la figure 9, l'extrémité inférieure 34b du tube 34 vient s'engager dans l'alésage de la tétine 35, sur une longueur $\underline{d}$ parfaitement déterminée et qui peut être par exemple de 2 mm.

Des pièces de renfort extérieur 41 sont disposées autour de la tétine 15 de manière à réaliser une fixation provisoire par expansion et dudgeonnage de l'extrémité 34b du tube 34, à l'intérieur de la tétine 15.

On réalise ensuite une soudure de l'extrémité du tube 34 sur la tétine 15, par un procédé connu de soudage orbital à l'intérieur d'un tube. Ce soudage est réalisé avec une position en saillie de l'extrémité 40 du tube 34 à l'intérieur de la tétine 15 de manière que la gravité agisse dans le même sens sur toute la longueur du cordon de soudure (position en corniche), ce qui facilite grandement les opérations de soudage du tube 34 sur la tétine 15.

Il est à noter que pendant toutes les opérations de remplacement d'un tube du générateur de vapeur, l'enveloppe du générateur de vapeur précédemment vidangée de son sodium liquide est remplie par un gaz neutre tel que de l'argon. Ce gaz neutre assure la protection de la soudure, du côté de la surface externe du tube 34 et de la tétine 15 (côté envers).

Le soudage de l'extrémité 34b du tube 34 sur la tétine 15 permet de réaliser une zone de jonction de forme sensiblement tronconique analogue à la zone de jonction 16' représentée sur la figure 2.

Lorsque le tube de remplacement 34 a été fixé par soudure sur les tétines 14 et 15 du générateur de vapeur, on effectue un contrôle sur chacune des soudures de raccordement. Ce contrôle peut être effectué soit par ultrasons à l'intérieur du tube, soit par radiographie.

Sur la figure 10, on a représenté le tube de remplacement 34 en place dans le générateur de vapeur et les huit tubes 34' entourant le tube 34. Comme il est visible sur la figure 10, les sections transversales des tubes du faisceau du générateur de vapeur sont disposées suivant un réseau à mailles sensiblement carrées ou chacun des tubes est entouré par huit tubes dans des dispositions voisines. Dans le cas où le contrôle des soudures du tube de remplacement 34 doit être réalisé par radiographie, on introduit un film 41 sensible aux rayons X, à l'intérieur du tube 34, au niveau des soudures de raccordement de ce tube 34 aux tétines correspondantes du générateur de vapeur.

On dispose dans chacun des huit tubes 34' une source de rayonnement 42, de manière à réaliser la radiographie des soudures et des zones du tube 34 voisines des zones soudées, par transmission des rayonnements produits par les sources 42 à travers la soudure ou la paroi du tube 34 et par impression du film sensible 41.

Les films 41 sont ensuite extraits du tube 34, développés et analysés pour déterminer la qualité des soudures réalisées. On peut ainsi garantir la qualité des soudures de raccordement du tube de remplacement.

Le procédé suivant l'invention permet de conserver les performances initiales du générateur de vapeur, le nombre de tubes en service n'étant pas modifié lors des opérations de réparation. De même, on évite toute dissymétrie dans la répartition radiale des températures du faisceau, par le fait que l'ensemble des tubes du faisceau restent en place dans le générateur de vapeur.

Dans le cas où l'on effectue le bouchage de certains tubes du faisceau, la répartition radiale des températures peut être fortement perturbée et il peut même être nécessaire, pour réduire les dissymétries, de boucher certains tubes sains en plus du tube défectueux nécessitant une réparation, ce qui se traduit par une diminution supplémentaire de la puissance du générateur de vapeur.

En outre, le procédé suivant l'invention présente l'avantage que les deux soudures de raccordement du tube de remplacement aux plaques tubulaires sont effectuées dans la position en corniche, ce qui est très favorable pour l'obtention d'un cordon de soudure d'une grande régularité et d'une grande homogénéité. En effet, dans le soudage en corniche, la gravité agit le même sens pendant toute la durée du soudage.

Les opérations de coupe et de soudage sont effectuées en introduisant des outillages appropriés par la face extérieure de l'une des plaques tubulaires, si bien que le remplacement d'un tube du faisceau ne nécessite qu'un démontage limité du générateur de vapeur.

Le procédé suivant l'invention permet également d'envisager la conception de générateurs de vapeur dont le remplacement intégral des tubes du faisceau est prévu après un certain temps de fonctionnement du générateur de vapeur qui peut correspondre par exemple au tiers ou à la moitiée de la durée de vie de ce générateur de vapeur.

Dans ce cas, la réalisation du générateur de vapeur est plus économique puisque, lors de la construction du générateur de vapeur neuf, l'épaisseur des tubes peut être réduite, ce qui permet d'augmenter sensiblement les performances d'échange thermique de ces tubes et de réduire le coût du générateur de vapeur. La réduction d'épaisseur envisageable est évaluée en prenant en compte une épaisseur de pénétration de la couche de corrosion plus faible, une durée de fluage plus courte et un nombre de cycles de fatigue réduit, dus à une réduction de la durée de fonctionnement prévue du générateur de vapeur avant son retubage complet.

En outre, on peut envisager raisonnablement que lors du retubage prévu d'un générateur de vapeur neuf sortant de fabrication, ce retubage devant avoir lieu après une durée de dix à vingt ans de fonctionnement du générateur de vapeur, les recherches et les progrès constants en ce qui concerne le matériau pour la réalisation des tubes auront permis d'obtenir un matériau dont les performances seront considérablement accrues par rapport aux performances du matériau constituant les tubes d'origine du générateur de vapeur.

Le procédé suivant l'invention ne se limite pas au mode de mise en oeuvre qui a été décrit.

C'est ainsi que ce procédé de remplacement peut s'appliquer aussi bien dans le cas où une seule extrémité du tube est engagée par emboîtement dans l'une des tétines d'assemblage d'une plaque tubulaire que dans le cas où les deux extrémités du tube sont engagées dans les tétines de raccordement des deux plaques tubulaires dont l'alésage est supérieur au diamètre du tube.

Dans le deuxième cas, la liaison de ces extrémités avec les tétines correspondantes est assurée par une zone de jonction de forme tronconique.

Au cours de l'extraction du tube à remplacer, ce tube peut être chauffé comme il a été indiqué de manière à refondre des dépôts éventuels de métal caloporteur tel que le sodium puis, éventuellement, refroidi pour faciliter son extraction, par rétraction thermique.

Pendant les opérations de remplacement du tube, l'espace intérieur de l'échangeur de chaleur disposé autour des tubes du faisceau peut être rempli par un gaz protecteur de nature quelconque tel qu'un gaz inerte ou un gaz neutre permettant en particulier de protéger les zones de soudage sur leur côté externe. Dans le cas d'un générateur de vapeur dont le fluide primaire est constitué par un métal liquide réactif tel que le sodium liquide, le remplissage de la partie centrale du générateur de vapeur renfermant le sodium liquide pendant le fonctionnement normal du réacteur, par un gaz inerte après vidange du sodium liquide, permet d'éviter tout risque de mise en contact d'un gaz oxydant avec les dépôts de sodium pouvant subsister dans la partie centrale du générateur de vapeur.

Enfin, le procédé suivant l'invention peut être utilisé pour effectuer le remplacement d'un ou plusieurs tubes d'un échangeur de chaleur différent d'un générateur de vapeur d'un réacteur nucléaire à neutrons rapides refroidi par du sodium liquide. Le procédé suivant l'invention s'applique à tout échangeur de chaleur à tubes droits comportant deux plaques tubulaires sensiblement parallèles, éloignées l'une de l'autre et traversées par des ouvertures au niveau desquelles les tubes sont fixés à leurs extrémités.

## Revendications

1.- Procédé de remplacement d'un tube (4) d'un échangeur de chaleur à tubes droits comportant deux plaques tubulaires (2, 3) sensiblement parallèles et éloignées l'une de l'autre traversées par des ouvertures (12, 13) au niveau desquelles les tubes (4) sont fixés à leurs extrémités, par soudage sur des piquages de raccordement (14, 15), chacun des tubes du faisceau de l'échangeur de chaleur étant fixé à l'une de ses extrémités sur un premier piquage (14) d' une première plaque tubulaire (2) et à son autre extrémité, sur un second piquage (15) d' une seconde plaque tubulaire (3), le diamètre intérieur de l'un au moins des piquages, ou second piquage (15) et de l'ouverture correspondante de la seconde plaque tubulaire (3) étant sensiblement supérieur au diamètre extérieur du tube (4) qui est raccordé au second piquage (15), par une zone de jonction (16') de forme sensiblement tronconique, caractérisé par le fait :

– qu'on réalise une coupe transversale du tube (4) au voisinage des piquages de raccordement (14, 15), à chacune de ses extrémités, par l'intérieur du tube (4) et à travers l'une ou l'autre des plaques tubulaires (2, 3),

– qu'on réalise une coupe de la zone de raccordement tronconique (16') du tube (4) avec le second piquage (15),

– qu'on extrait le tube à remplacer de l'espace de l'échangeur de chaleur compris entre les plaques tubulaires (2, 3), par l'intérieur du second piquage (15) et de l'ouverture (13) correspondante de la seconde plaque tubulaire (3),

– qu'on réalise le nettoyage et le réusinage des zones de coupe (18, 19'),

– qu'on introduit un tube de remplacement (34) dans l'échangeur de chaleur par l'ouverture (13) de la seconde plaque tubulaire, jusqu'à ce qu' une première extrémité du tube (34) engagée en premier dans l'échangeur de chaleur vienne au niveau de la zone de coupe (18) du premier piquage (14),

– qu'on réalise le soudage en corniche de la première extrémité du tube (34) sur le premier piquage (14),

– qu'on ajuste la longueur du tube de remplacement (34) de manière que sa seconde extrémité (34b) soit engagée sur une longueur déterminée dans le second piquage (15),

– et qu'on réalise le soudage en corniche de la seconde extrémité du tube (34) à l'intérieur du second piquage (15).

2.- Procédé suivant la revendication 1, dans le cas où le tube (4) à remplacer est raccordé bout à bout à l'une de ses extrémités au premier piquage (14) dont le diamètre est sensiblement égal à celui du tube, par une soudure de jonction (16) annulaire réalisée en corniche et, à sa seconde extrémité, au second piquage (15) dont le diamètre intérieur est sensiblement supérieur au diamètre du tube, par une zone de jonction de forme tronconique (16'), caractérisé par le fait que le tube de remplacement (34) est introduit dans l'échangeur de chaleur jusqu' à ce que sa première extrémité vienne en butée avec la zone de coupe (18) du premier piquage (14) et que la première extrémité du tube (34) est soudée bout à bout sur le premier piquage (14).

3.- Procédé suivant la revendication 1, dans le cas où le premier piquage (14) et le second piquage (15) présentent un diamètre intérieur supérieur au diamètre du tube (4) à remplacer dont les extrémités sont reliées aux piquages (14, 15) par des zones de jonction de forme tronconique (16'), caractérisé par le fait que le tube de remplacement (34) est introduit dans l'échangeur de chaleur jusqu'à ce que sa première extrémité pénètre dans le premier piquage (14) sur une longueur déterminée et que le soudage de cette première extrémité du tube de remplacement (34) puis le soudage de la deuxième extrémité dans le piquage (15) sont réalisés en corniche, à l'intérieur des piquages (14, 15) correspondants.

**4.-** Procédé suivant l'une quelconque des revendications 1 à 3, caractérisé par le fait qu'on établit autour du tube (4) à remplacer une atmosphère de gaz neutre, pendant toute les opérations de remplacement du tube (4) par un tube (34).

**5.-** Procédé suivant la revendication 4, dans le cas d'un échangeur de chaleur comportant un faisceau de tubes entourés par une enveloppe (1) fixée aux plaques tubulaires (2, 3), caractérisé par le fait que l'enveloppe (1) de l'échangeur de chaleur est remplie de gaz neutre pendant les opérations de remplacement d'un tube (4) du faisceau.

**6. -** Procédé suivant l'une quelconque des revendications 1 à 5, caractérisé par le fait que la longueur du tube de remplacement (34) est ajustée par découpage de ce tube (34) à sa seconde extrémité (34b), après refroidissement du tube (34), de manière que la zone de coupe (36) de la seconde extrémité (34b) du tube (34) se trouve à l'extérieur du second piquage (15), pendant le découpage.

**7.-** Procédé suivant l'une quelconque des revendications 1 à 6, caractérisé par le fait que le tube (4) à remplacer est chauffé, pendant son extraction, par l'intérieur du second piquage (15) et de l'ouverture correspondante (13) de la seconde plaque tubulaire (3).

**8. -** Procédé suivant l'une quelconque des revendications 1 à 6, caractérisé par le fait que le tube (4) à remplacer est refroidi, pendant son extraction, par l'intérieur du second piquage (15) et l'ouverture correspondante (13) de la seconde plaque tubulaire (3).

**9.-** Utilisation d'un procédé suivant l'une quelconque des revendications 1 à 8 pour le remplacement d'un tube de générateur de vapeur d'un réacteur nucléaire à neutrons rapides refroidi par du sodium liquide.

FIG.1

FIG 5

FIG. 4

FIG. 2

FIG_10

FIG_3

## FIG_6

## FIG_7

## FIG_8

## FIG_9

13

Office européen
des brevets

**RAPPORT DE RECHERCHE EUROPEENNE**

Numero de la demande

EP    91 40 2420

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | EP-A-0 288 359 (NOVATOME) | 1,2,9 | B23P6/00 |
| A | * le document en entier * | 6 | |
| | --- | | |
| Y | EP-A-0 234 920 (FOSTER WHEELER ENERGY CORP.) | 1,2,9 | |
| A | * revendication 1 * | 3 | |
| | --- | | |
| A | PATENT ABSTRACTS OF JAPAN vol. 4, no. 7 (C-070)19 Octobre 1980 & JP-A-54 139 855 ( HITACHI ) 30 Octobre 1979 * abrégé * | 4,5 | |
| | --- | | |
| A | PATENT ABSTRACTS OF JAPAN vol. 13, no. 194 (M-823)(3542) 10 Mai 1989 & JP-A-01 020 940 ( HITACHI ) 24 Janvier 1989 * abrégé * | 8 | |
| | ----- | | |
| | , | | |

**DOMAINES TECHNIQUES RECHERCHES (Int. Cl.5 )**

B23P

Le présent rapport a été établi pour toutes les revendications

| Lieu de la recherche | Date d'achèvement de la recherche | Examinateur |
|---|---|---|
| LA HAYE | 04 DECEMBRE 1991 | RIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)